# EUROPEAN PATENT APPLICATION

(11) **EP 2 363 367 A2**
(43) Date of publication of application: **07.09.2011**
(21) Application number: 11155566.0
(22) Date of filing: 23.02.2011
(51) Int. Cl.: B65H 54/70, B65H 69/06, F16L 29/00

(54) **Textile machine and pipe joint**

(30) Priority: 03.03.2010 JP 2010045104
(71) Applicant: Murata Machinery, Ltd., Kyoto-shi, Kyoto 6018326 (JP)
(72) Inventor: Inoue, Takuya, Kyoto 612-8686 (JP); Hidaka, Ichiro, Kyoto 612-8686 (JP); Takahashi, Akira, Kyoto 612-8686 (JP)
(74) Representative: Vogeser, Werner

(57) **Abstract**

Pressure pipes (32) are joined together with a pipe joint (40). The pressure pipes are coupled to splicer devices (20) of an automatic winder. A clamping collar (41) that includes a partition plate (51) is attached to the pipe joint (40). The partition plate shuts off a communication between the two pressure pipes (32) joined together with the pipe joint. The partition plate can be mounted in and demounted from the pipe joint.

## Description

### BACKGROUND OF THE INVENTION

### 1. Field of the Invention

The present invention relates to textile machines and pipe joints.

### 2. Description of the Related Art

A technique for joining two pipes together with a pipe joint in a manner that allows communication between the two pipes is known in the art (see, for example, Japanese published unexamined application No. 2000-170971). Gases having the same pressure are typically supplied into the two pipes joined together with such a pipe joint. If gases having different pressures are to be supplied into the two pipes, or a gas having a predetermined pressure is to be supplied into only one of the pipes, the pipe joint is removed and lids are attached to open end portions of the pipes to seal the end portions.

However, such a technique is disadvantageous in that it requires lids in addition to the pipe joint. Moreover, it is difficult to shut off a communication between the two pipes while the two pipes are in the joined state.

### SUMMARY OF THE INVENTION

In view of the above discussion, it is an object of the present invention to provide a textile machine that can selectively open and shut off a gas communication between two pipes by using only a pipe joint, and to provide such a pipe joint.

According to an aspect of the present invention, a textile machine includes a plurality of processing units each of which includes an operation device that processes any one of a textile raw material and a yarn formed by spinning the textile raw material; a pipe joint; and two pipes configured to be joined together with the pipe joint. A first operation device, being one or a plurality of the operation devices, is coupled to a first pipe, being one of the two pipes. A second operation device, being one or a plurality of the operation devices, is coupled to a second pipe, being the other one of the two pipes. A partition member that selectively opens and shuts off a gas communication between the two pipes is detachably mounted in the pipe joint.

According to another aspect of the present invention, a pipe joint for joining two pipes together to allow a fluid to flow through the two pipes includes a sealing member, which is made of an elastic material, that comes into close contact with outer peripheral surfaces of end portions, at which the two pipes are joined together, of the two pipes to prevent leakage of the fluid from the two pipes; a clamping member that clamps the sealing member; and a partition member that is detachably mounted in the sealing member.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

FIG. 1 is an elevation view illustrating a schematic configuration of an automatic winder according to an embodiment of the present invention;
FIG. 2 is an elevation view of a winding unit of the automatic winder;
FIG. 3 is an elevation view illustrating a schematic configuration of two winding units of the automatic winder;
FIG. 4 is an enlarged view of and around a pipe joint, to which two pipes are joined;
FIG. 5 is a cross-sectional view taken along a line A-A of FIG. 4;
FIG. 6 is a cross-sectional view of a pipe joint, in which a partition plate is not mounted; and
FIGS. 7A and 7B are cross-sectional views of modifications of the pipe joint.

### DETAILED DESCRIPTION OF THE PREFERRED EMBODIMENTS

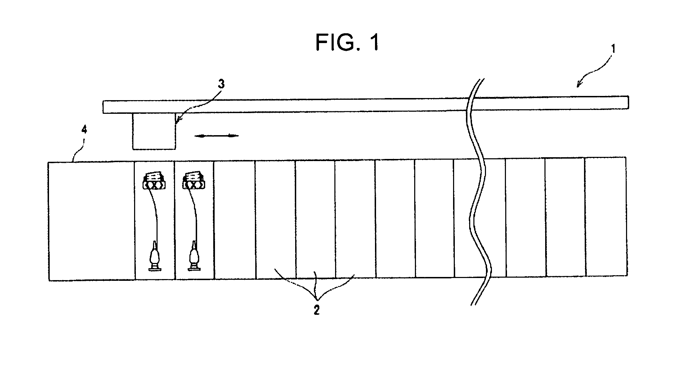

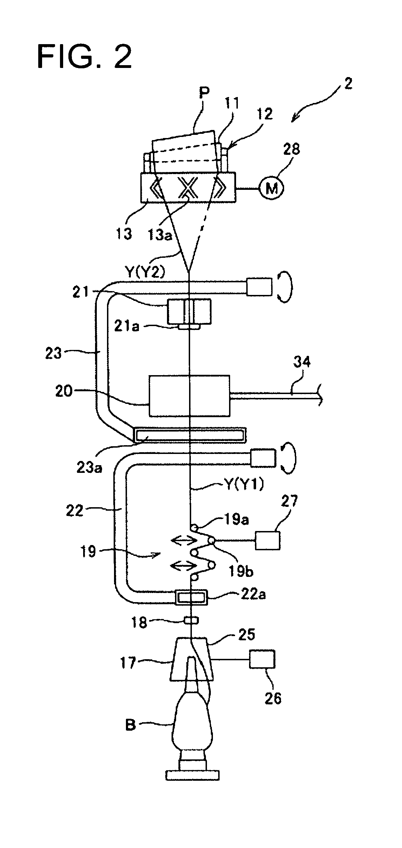

Exemplary embodiments of the present invention are explained below with reference to the accompanying drawings. The embodiments are applied to an automatic winder (textile machine) that includes a number of winding units. Each of the winding units winds a yarn unwound from a yarn feeding bobbin onto a winding tube to form a package. FIG. 1 is an elevation view illustrating a schematic configuration of an automatic winder 1 according to an embodiment of the present invention. FIG. 2 is an elevation view of a winding unit 2 of the automatic winder 1.

As illustrated in FIGS. 1 and 2, the automatic winder 1 includes a plurality of winding units 2 (processing units) arranged in a row, a doffer 3 movable in a direction along which the winding units 2 are arranged, and a machine frame 4 that includes a control unit that performs an overall control of the automatic winder 1.

The automatic winder 1 is configured such that each of the winding units 2 winds a spun yarn Y unwound from a yarn feeding bobbin B on a winding tube 11 to form a package P. When the winding unit 2 has formed a fully wound package P of a predetermined length and shape, the doffer 3 moves to a position above the corresponding winding unit 2, removes the package P, and mounts an empty winding tube 11, i.e., a winding tube 11 on which no yarn has been wound, in place of the package P.

The configuration of the winding unit 2 is described in detail below. The winding unit 2 illustrated in FIG. 2 forms the fully wound package P by winding the spun yarn Y unwound from the yarn feeding bobbin B on the winding tube 11 while causing the spun yarn Y to traverse.

The winding unit 2 includes, at its top portion, a cradle 12 provided on a unit frame (not shown) that rotatably holds the winding tube 11 and, at its bottom portion, a traversing drum 13 that is also rotatably supported by the unit frame. The traversing drum 13 is rotated by a drum driving motor 28. A helical traversing groove 13a that causes the spun yarn Y to traverse is formed on the surface of the traversing drum 13. While causing the spun yarn Y to traverse along the traversing groove 13a, the traversing drum 13 is rotated in a state of being in contact with the package P formed by winding the spun yarn Y on the winding tube 11. As a result, the package P is rotated by frictional contact between the package P and the traversing drum 13 causing the spun yarn Y unwound from the yarn feeding bobbin B to be wound on the winding tube 11.

As illustrated in FIG. 2, on a yarn path from the yarn feeding bobbin B to the traversing drum 13, an unwinding assisting device 17, a yarn-breakage detecting unit 18, a tensioning device 19, a splicer device 20 (operation device), and a clearer (yarn defect clean up device) 21 are arranged in this order.

The unwinding assisting device 17 includes a cylindrical member 25 arranged over the yarn feeding bobbin B and a driving device 26 that causes the cylindrical member 25 to descend. The driving device 26 is controlled such that a clearance between the cylindrical member 25 and a leading end (chase portion) of a yarn layer of the yarn feeding bobbin B is maintained substantially constant so that the yarn Y is unwound stably. The yarn-breakage detecting unit 18 determines presence/absence of the spun yarn Y in a portion between the unwinding assisting device 17 and the tensioning device 19.

The tensioning device 19 applies a predetermined tension to the running spun yarn Y. In the example illustrated in FIG. 2, a tensioning device of a gate type having fixed teeth 19a and movable teeth 19b is employed as the tensioning device 19. The tensioning device 19 is pivotable to place the teeth 19a in a state meshed with the teeth 19b or in a state released from the teeth 19b. The tensioning device 19 is caused to pivot by a rotary solenoid 27.

The splicer device 20 splices a lower yarn Y1 on the yarn feeding bobbin B to an upper yarn Y2 on the package P when, for example, yarn breakage occurs during unwinding or when a yarn is cut, to remove a yarn defect detected by the clearer 21. The clearer 21 will be described later. The splicer device 20 is an operation device that is operated with a compressed air and that is generally known as an air splicer. The air splicer supplies the compressed air into a space where the lower yarn Y1 and the upper yarn Y2 overlaid on each other are housed so that an air flow generated in the space intertwines the lower yarn Y1 and the upper yarn Y2 with each other, thereby achieving splicing. Air splicers are known in the art, see for example Japanese published unexamined application No. S61-257877, so that detail description about the air splicer is omitted herefrom.

A lower-yarn catching-and-guiding member 22 and an upper-yarn catching-and-guiding member 23 are provided above the splicer device 20 and below the splicer device 20, respectively. The lower-yarn catching-and-guiding member 22 catches the lower yarn Y1 extending from the yarn feeding bobbin B and guides the yarn to the splicer device 20. The upper-yarn catching-and-guiding member 23 catches the upper yarn Y2 extending from the package P and guides the yarn to the splicer device 20. When a yarn breakage occurs during yarn unwinding or when a yarn is cut by the clearer 21, a suction mouth 22a in the lower-yarn catching-and-guiding member 22 catches a yarn end of the lower yarn Y1 at the position illustrated in FIG. 2. The lower-yarn catching-and-guiding member 22 then pivots upward to guide the lower yarn Y1 to the splicer device 20. Simultaneously, a suction mouth 23a of the upper-yarn catching-and-guiding member 23 pivots from the position illustrated in FIG. 2 to a yarn-end catching position near a contact point between the package P and the traversing drum 13. At this yarn-end catching position, the upper-yarn catching-and-guiding member 23 catches a yarn end of the upper yarn Y2 extending from the package P. Thereafter, the suction mouth 23a pivots downward again, thereby guiding the upper yarn Y2 to the splicer device 20.

The clearer 21 detects a yarn defect, such as a slub, formed in the spun yarn Y. A cutter 21a used for cutting a yarn when a yarn defect is detected is annexed to the clearer 21.

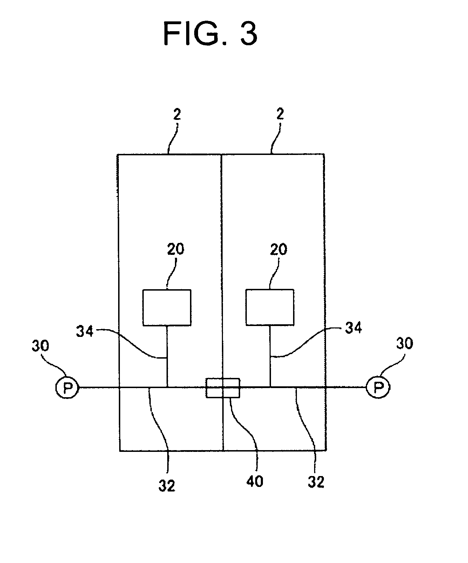

A structure that supplies the compressed air to the splicer device 20 is described below. For brevity, a structure that simultaneously supplies the compressed air to the splicer devices 20 of two winding units 2 is described below. As illustrated in FIG. 3, the splicer devices 20 of the two winding units 2 are individually coupled to two pressure pipes 32 via inlet pipes 34 in a one-to-one relationship. First ends of the two pressure pipes 32 are joined together with a pipe joint 40. Second ends of the pressure pipes 32 are coupled to a pump 30 (air-pressure adjusting devices), respectively. The pipe joint 40 that joins the two pressure pipes 32 together includes, in its interior, a partition plate (partition member) 51 that blocks a communication between the two pressure pipes 32. The partition plate 51 will be described later.

The pipe joint 40 is described in detail below. As illustrated in FIGS. 3 to 5, the pipe joint 40 includes a cylindrical clamping collar 41 with a slit 41a, a metal plate 45 in contact with an inner peripheral surface of the clamping collar 41, a cylindrical sealing member 50 in contact with an inner peripheral surface of the metal plate 45, and the partition plate 51 that divides an interior space of the sealing member 50 into two. The clamping collar 41 is made of a metal such as Japanese Industrial Standards (JIS) SUS304 (stainless steel). The metal plate 45 is a thin metal plate rolled into a cylindrical shape. The sealing member 50 is a member made of an elastic material such as rubber.

Two clamping plates 42 made of a metal, such as JIS SUS304, and facing each other are joined to the clamping collar 41 individually at two edges, with the slit 41a therebetween, of the clamping collar 41. Each of the clamping plates 42 is tangential to the clamping collar 41 at a corresponding one of the edges. The free end of the clamping plate 42 is curved to form a hollow cylinder. A shaft 43 is arranged inside this hollow cylinder. Two through holes are formed in the shafts 43 such that the through holes are positioned at different positions on an axis of the shafts 43 and radially pass through the shaft 43. Openings are formed in the clamping plates 42 at positions corresponding to the through holes to allow the through holes in the shafts 43 to be exposed.

Two bolts 44 are inserted through the through holes in a first shaft 43, being one of the shafts 43, in the cylinder formed by one of the two clamping plates 42 with leading ends of the two bolts 44 screwed in the through holes, which are threaded, in a second shaft 43, being the other of the shafts 43. Fastening of the bolts 44 leads to a movement of the shafts 43 toward each other. Accordingly, the clamping plates 42 are also moved toward each other leading to a reduction in the diameter of the clamping collar 41. The clamping plates 42, the shafts 43, and the bolts 44 of the present embodiment are an example of a clamping member in the present invention.

The metal plate 45 is a thin plate rolled into a cylindrical shape. The metal plate 45 includes bent portions 45a formed by inwardly bending two end portions, which are on axially opposite ends, of the metal plate 45. A toothed member 45c, in which a plurality of notches 45b spaced from each other are defined along the periphery, is attached to each of the bent portions 45a.

The sealing member 50 includes two annular protrusions 50a spaced from each other in the axial direction of the sealing member 50 and projecting from an inner peripheral surface of an axial center portion of the sealing member 50. A mounting portion 50c, in which the disc-shaped partition plate 51 made of a metal can be detachably mounted, is provided between the two protrusions 50a of the sealing member 50. The mounting portion 50c is an annular recess defined between the two protrusions 50d. The outer diameter of the partition plate 51 is slightly greater than the inner diameter of the sealing member 50 at a position where the annular recess between the two protrusions 50a is located. This arrangement causes the partition plate 51 to be press-fit into the annular recess between the two protrusions 50a. Meanwhile, the sealing member should preferably be made of ethylenepropylene terpolymer (EPDM).

Sealing protrusions 50b projecting radially inward are formed on the inner peripheral surface of axial two end portions of the sealing member 50. When the pressure pipes 32 are inserted into the sealing member 50 in the pipe joint 40 in directions axially opposite to each other and thereafter the bolts 44 are fastened, the diameter of the clamping collar 41 is reduced. Reduction in the diameter of the clamping collar 41 in turn reduces the diameter of metal plate 45, causing the sealing protrusion 50b of the sealing member 50 to clamp the pressure pipes 32. Thus, the two pressure pipes 32 are joined together with the pipe joint 40. This prevents leakage of a fluid from the pressure pipes 32. Moreover, the communication between the two pressure pipes 32 is shut off because the partition plate 51 is mounted in the sealing member 50.

In this state, the partition plate 51 in the sealing member 50 fits in the annular recess between the two protrusions 50a and pressed by the sealing member 50. This advantageously shuts off the communication between the two pressure pipes 32 more reliably because the partition plate 51 is prevented from moving and the partition plate 51 is caught between the two protrusions 50a, causing the gap between the sealing member 50 and the partition plate 51 to be sealed tightly.

The toothed member 45c having the notches 45b and attached to the metal plate 45 prevents the pressure pipes 32 from sliding off the pipe joint 40. In contrast, loosening of the bolts 44 leads to an increase in the diameter of the clamping collar 41, which in turn increases the diameter of the metal plate 45, loosening clamping effected by the sealing member 50. After the pressure pipes 32 have been removed from the pipe joint 40, the partition plate 51 can be removed from inside the sealing member 50.

When the two pressure pipes 32 are joined together with the pipe joint 40 having the partition plate 51 as discussed above, the pumps 30 serving as the air-pressure adjusting devices are individually coupled to the two pressure pipes 32 as illustrated in FIG. 3. Therefore, it is possible to cause the two pressure pipes 32 to have different internal pressures by operating the two pumps 30 such that the pumps 30 deliver different pressures. When done so, the splicer devices 20 individually coupled to the pressure pipes 32 via the inlet pipes 34 are supplied with the compressed airs having the different pressures. Accordingly, air flows that differ from each other in a rotary torque from one splicer device to other splicer device can be created in the splicer devices 20. When the winding units 2 including the splicer devices 20 wind spun yarns Y of different yarn types, or, more specifically, of different yarn thicknesses, fibers intertwine with one another in different manners that depend on a relationship between the yarn type and the rotary torque of the air flow. For example, assuming that one of the pumps 30 (hereinafter, "a first pump 30") delivers a pressure of 0.4 megapascals (MPa) while the other one of the pumps 30 (hereinafter, "a second pump 30") delivers a pressure of 0.8 MPa, a pressure difference as great as 0.4 MPa can develop between one of the pressure pipes 32 (hereinafter, "a first pressure pipe 32") coupled to the first pump 30 and the other one of the pressure pipes 32 (hereinafter, "a second pressure pipe 32") coupled to the second pump 30. For situations where there is a pressure difference, bringing the pressure pipes 32 into communication with each other and shutting off the communication can be easily achieved by providing a valve that opens and closes the communication. However, when the pressure difference is high, the valve may not shut off the communication sufficiently, resulting in occurrence of a leakage. Moreover, the configuration that includes a valve is not only complicated in structure but also expensive. In contrast, in the configuration where the two pressure pipes 32 are joined together with the pipe joint 40 having the partition plate 51, the communication between the two pressure pipes 32 individually coupled to the two splicer devices 20 can be shut off reliably. Accordingly, it is possible to supply the compressed airs having different pressures, each of which is optimum for a corresponding one of the splicer devices 20, to each of the splicer device 20, corresponding to a first operation device, coupled to the first pressure pipe 32 and the splicer device 20, corresponding to a second operation device, coupled to the second pressure pipe 32.

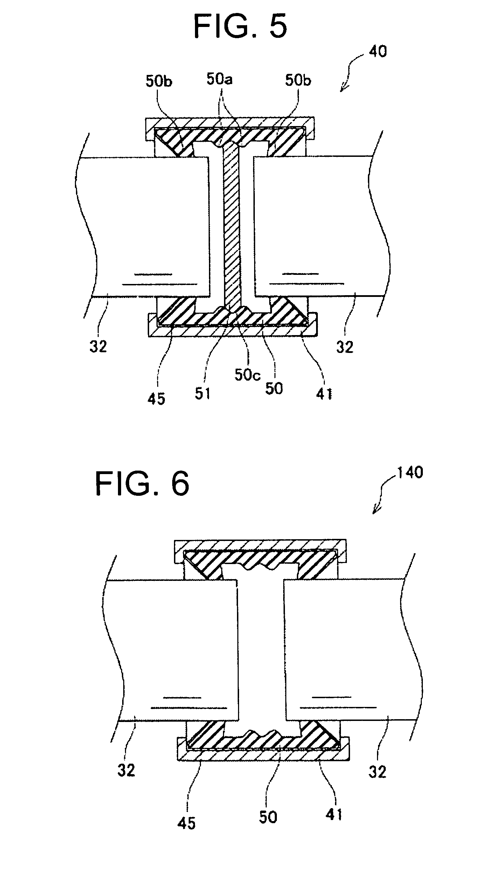

As illustrated in FIG. 6, the partition plate 51 can be demounted from the mounting portion 50c so that the two pressure pipes 32 are joined together with a pipe joint 140, in which the partition plate 51 is not mounted. The pipe joint 140 is similar to the pipe joint 40 in structure except that the partition plate 51 is not mounted in the pipe joint 140. When the two pressure pipes 32 are joined together with the pipe joint 140 having no partition plate, the two pressure pipes 32 are brought into communication with each other, causing the two pressure pipes 32 to have the same internal pressure. Therefore, it is possible to supply compressed airs having the same pressure to the two splicer devices 20 each coupled to a corresponding one of the two pressure pipes 32 by stopping one of the pumps 30 and running only the other one of the pumps 30. This reduces the number of the pumps 30 to be operated, thereby reducing electric power consumption.

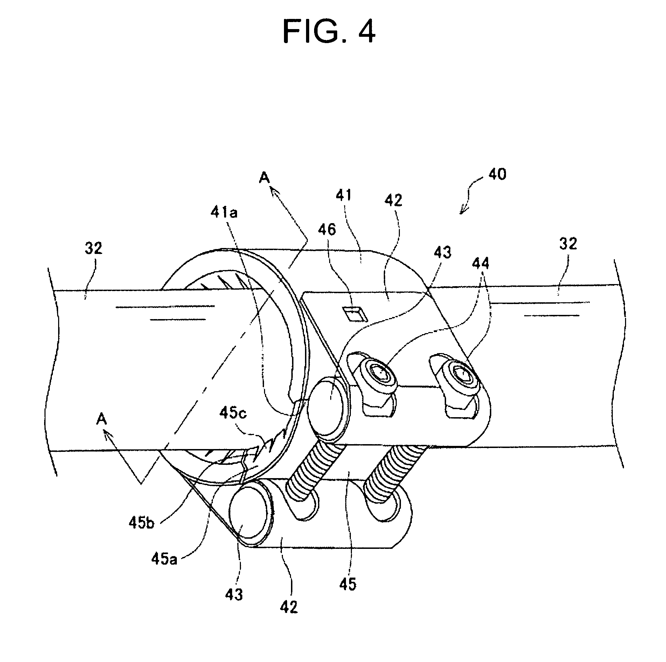

Differentiation between the pipe joint 40, in which the partition plate 51 is mounted on the mounting portion 50c, and the pipe joint 140, in which the partition plate 51 is not mounted, can be made by using different colors for the bolts 44 of the pipe joint 40 and those for the pipe joint 140 or by applying a marking to an externally easy-to-see position. This allows, even in a state where the two pressure pipes 32 are joined together with a pipe joint, determination as to whether the pipe joint is the pipe joint 40, in which the partition plate 51 is mounted, or the pipe joint 140, in which the partition plate 51 is not mounted, to be made easily without disassembling the pipe joint to determine whether the pipe joint includes the partition plate 51. In the present embodiment, as illustrated in FIG. 4, a recess 46 (identifier portion) is provided in the clamping plate 42 of only the pipe joint 40, in which the partition plate 51 is mounted. Meanwhile, any one of an arrangement where such an identifier portion is provided on either one of the pipe joint 40 and the pipe joint 140, and an arrangement where different identifier portions are individually provided on the pipe joint 40 and the pipe joint 140 can be employed so long as determination as to whether the pipe joint includes the partition plate 51 can be made based on the identifier portion(s).

Although the pipe joint 40 according to the present embodiment has such a simple structure that the partition plate 51 is mounted in the sealing member 50, the pipe joint 40 can shut off the communication between the two pressure pipes 32 reliably. Accordingly, the communication between the two pressure pipes 32 in a state where the two pressure pipes 32 are joined together can be shut off only by mounting the partition plate 51 to the pipe joint 140, in which the partition plate 51 is not mounted, by using the pipe joint 40 that is identical in the configuration with the pipe joint 140 except that the pipe joint 40 includes the partition plate 51.

In the automatic winder 1 discussed above, by operating the pumps 30 each individually coupled to a corresponding one of the two pressure pipes 32 that are joined together with the pipe joint 40, compressed airs having different pressures can be supplied into the pressure pipes 32, via which the compressed airs having the different pressures is supplied to the two splicer devices 20. In a state where the pipe joint 40 has been replaced with the pipe joint 140, in which the partition plate 51 is not mounted, operating only the pump 30 coupled to one of the pressure pipes 32 causes gases having the same pressure to be supplied into the two pressure pipes 32; hence, compressed airs having the same pressure can be supplied to the two splicer devices 20. As discussed above, by using the pipe joints that are identical to each other in the configuration except for presence or absence of the partition plate 51, it is possible to change the pressures of the compressed airs supplied to each of the splicer devices 20 in the state where the two pressure pipes 32 are joined together.

Conventionally, the communication between the two pressure pipes 32 has been shut off by attaching lids to the open end portions of the two pressure pipes 32 to seal the end portions. In contrast, even if a clearance between the end portions of the pressure pipes 32 is relatively small and therefore it is difficult to mount lids on the end portions, the pipe joint 40, in which the partition plate 51 is mounted, can be easily mounted only by deforming the sealing member 50, which is an elastic member, so that the pipe joint 40 caps the end portions of the pressure pipe 32 without changing the lengths of the pressure pipes 32 or the clearance between the pressure pipes 32.

Various possible modifications of the embodiment discussed above are described below. In the embodiment discussed above, the two pressure pipes 32 joined together with the pipe joint 40 have been coupled to the splicer devices 20 each being an air splicer; alternatively, other types of operation devices can be coupled to the two pressure pipes 32 so long as such operation devices are operated with a compressed gas or a depressurized gas supplied via the two pressure pipes 32. For example, in the automatic winder 1, the suction mouth 23a and the like that, when a yarn breakage occurs or when a yarn is cut, sucks and catches a yarn end and conveys the yarn end to the splicer can be coupled to the pressure pipes 32.

In the embodiment, the different pumps 30 are individually coupled to the two pressure pipes 32; alternatively, an arrangement where only one of the pumps 30 is coupled to one of the pressure pipes 32 (hereinafter, "pump-coupled pressure pipe 32") and the other one of the pumps 30 is not coupled to the other pressure pipe 32 (hereinafter, "pump not-coupled pressure pipe 32") can be employed. With this arrangement, when the two pressure pipes 32 are joined together with the pipe joint 40 having the partition plate 51, a communication between the two pressure pipes 32 is shut off; when the pump 30 is operated, the compressed air is supplied only into the pump-coupled pressure pipe 32 but not supplied into the pump not-coupled pressure pipe 32. Accordingly, it is possible to supply the compressed air only to the splicer device 20 coupled to the pump-coupled pressure pipe 32 and to stop supply of the compressed air to the splicer device 20 coupled to the pump not-coupled pressure pipe 32. In a state where the partition plate 51 has been removed to replace the pipe joint 40 with the pipe joint 140, in which the partition plate 51 is not mounted, operating the pump 30 causes compressed airs having the same pressure to be supplied into the two pressure pipes 32; hence, the compressed airs having the same pressure can be supplied to the two splicer devices 20. As discussed above, by using the pipe joint 40 that is identical with the pipe joint 140 in the configuration except for presence or absence of the partition plate 51, it is possible to change a condition for supplying the compressed air to the splicer devices 20.

Furthermore, in the embodiment, the two protrusions 50a where the partition plate 51 is positioned are formed on the sealing member 50; however, the two protrusions 50a may not be provided.

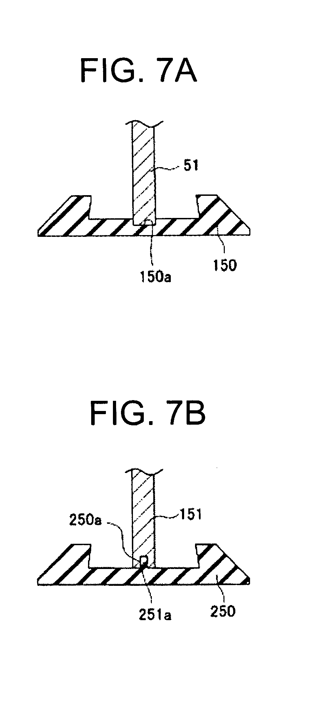

In addition, in the embodiment, the partition plate 51 is located in the annular recess between the two protrusions 50a formed on the sealing member 50 to seal the gap between the sealing member 50 and the partition plate 51 tightly; alternatively, as illustrated in FIG. 7A, a configuration where an annular recess 150a is defined in a sealing member 150 and the partition plate 51 is located in the recess 150a can be employed. Furthermore, a configuration illustrated in FIG. 7B where a recess 251a and a protrusion 250a that can engage with each other are provided on a partition plate 251 and a sealing member 250, respectively, can be employed.

In the embodiment and the modifications discussed above, the pipe joint 40 of the present invention is applied to the automatic winder 1; however, an intended object to which the pipe joint of the invention is applied is not limited to the automatic winder 1. The pipe joint can be applied not only to various textile machines, such as spinning machines, but also to apparatuses other than the textile machines, so long as the machine includes a structure for opening and shutting off a communication between two pipes.

According to an aspect of the present invention, a textile machine includes a plurality of processing units each of which includes an operation device that processes any one of a textile raw material and a yarn formed by spinning the textile raw material; a pipe joint; and two pipes configured to be joined together with the pipe joint. A first operation device, being one or a plurality of the operation devices, is coupled to a first pipe, being one of the two pipes. A second operation device, being one or a plurality of the operation devices, is coupled to a second pipe, being the other one of the two pipes. A partition member that selectively opens and shuts off a gas communication between the two pipes is detachably mounted in the pipe joint.

The pipe joint allows, by using the single pipe joint, the gas communication between the two pipes to be selectively opened and shut off only by mounting and demounting the partition member in and from the pipe joint. Furthermore, it is not necessary to adjust the clearance between the pipes when opening or shutting off the gas communication between the two pipes because it is possible to selectively open and shut off the gas communication by using the single pipe joint.

The first pipe is preferably coupled to a first air-pressure adjusting device that generates a compressed gas or a depressurized gas that operates the first operation device. The second pipe is preferably coupled to a second air-pressure adjusting device that generates a compressed gas or a depressurized gas that operates the second operation device. The pipe joint, in which the partition member is mounted, preferably shuts off the gas communication between the two pipes. This arrangement allows different pressures to be developed in the two pipes even when the two pipes are joined together, thereby making it possible to operate the first operation device and the second operation device with the gases having different pressures.

Furthermore, the pipe joint preferably includes a sealing member, which has a cylindrical shape and which is made of an elastic material, that comes into close contact with outer peripheral surfaces of end portions, at which the two pipes are joined together, of the two pipes to prevent leakage of the gas from the two pipes; and a clamping member that clamps the sealing member in a manner that reduces a diameter of the sealing member. The partition member is preferably formed into a disc shape. A mounting portion, with which an outer peripheral surface of the partition member is brought into close contact to mount the partition member therein, is preferably provided on an inner peripheral surface of an axial center portion of the sealing member. With this arrangement, the partition member mounted in the mounting portion seals a gap between the sealing member and the partition member tightly, thereby shutting off the communication between the two pipes reliably.

Furthermore, the mounting portion should preferably be an annular recess formed in the inner peripheral surface of the axial center portion of the sealing member. This arrangement prevents the outer peripheral surface of the partition member from fitting in the recess in the sealing member, thereby preventing movement of the partition member so that the communication between the two pipes can be shut off more reliably. This arrangement also facilitates mounting and demounting of the partition member.

Furthermore, the annular recess should preferably be provided between two annular protrusions that are spaced from each other in an axial direction of the sealing member and provided on the inner peripheral surface of the axial center portion of the sealing member. This arrangement shuts off the communication between the two pipes more reliably because movement of the partition member is prevented and the partition member is caught between the two protrusions, causing the gap between the sealing member and the partition member to be sealed tightly.

The operation devices should preferably be splicer devices that splice yarns by using an air flow. This arrangement allows, by selectively opening and shutting off the communication between the two pipes, operations of a plurality of the splicer devices to be effected at a single pressure or different pressures. Accordingly, even when yarns of different yarn types that differ from one another in necessary pressure to be delivered to a splicer device are to be processed by the processing units, it is possible to operate the splicer devices at different pressures, each depending on the yarn type.

According to another aspect of the present invention, a pipe joint for joining two pipes together to allow a fluid to flow through the two pipes includes a sealing member, which is made of an elastic material, that comes into close contact with outer peripheral surfaces of end portions, at which the two pipes are joined together, of the two pipes to prevent leakage of the fluid from the two pipes; a clamping member that clamps the sealing member; and a partition member that is detachably mounted in the sealing member.

The pipe joint allows, by using the single pipe joint, fluid communication between the two pipes to be selectively opened and shut off only by mounting and demounting the partition member in and from the pipe joint.

The sealing member should preferably be formed into a cylindrical shape. The partition member should preferably be formed into a disc shape. A mounting portion, with which an outer peripheral surface of the partition member is brought into close contact to mount the partition member therein, should preferably be provided on an inner peripheral surface of an axial center portion of the sealing member. With this arrangement, the partition member mounted in the mounting portion seals the gap between the sealing member and the partition member tightly, thereby shutting off the communication between the two pipes reliably.

Furthermore, the mounting portion should preferably be an annular recess formed in the inner peripheral surface of the axial center portion of the sealing member. This arrangement prevents the outer peripheral surface of the partition member from fitting in the recess in the sealing member, thereby preventing movement of the partition member so that the communication between the two pipes can be shut off more reliably.

Furthermore, the annular recess should preferably be provided between two annular protrusions that are spaced from each other in an axial direction of the sealing member and provided on the inner peripheral surface of the axial center portion of the sealing member. This arrangement shuts off the communication between the two pipes more reliably because movement of the partition member is prevented and the partition member is caught between the two protrusions, causing the gap between the sealing member and the partition member to be sealed tightly.

Thus, it is possible to selectively open and shut off a gas communication between the two pipes by using the single pipe joint only by mounting and demounting the partition member in and from the pipe joint.

While the present invention has been described with respect to preferred embodiments thereof, it will be apparent to those skilled in the art that the disclosed invention may be modified in numerous ways and may assume many embodiments other than those specifically set out and described above. Accordingly, it is intended by the appended claims to cover all modifications of the present invention that fall within the true spirit and scope of the present invention.

## Claims

1. A textile machine comprising:
a plurality of processing units each (2) of which includes a plurality of operation devices that process a textile raw material and a yarn is formed by spinning the textile raw material;
a pipe joint (40); and
two pipes (32) configured to be joined together with the pipe joint, wherein
a first operation device (20), being one of the plurality of the operation devices, is coupled to a first pipe, being one of the two pipes (32),
a second operation device (20), being another one of the plurality of the operation devices, is coupled to a second pipe, being another one of the two pipes (32), and
a partition member (51) that selectively opens and shuts off a gas communication between the two pipes (32) is detachably mounted in the pipe joint (40).

2. The textile machine according to Claim 1, wherein
the first pipe (32) is coupled to a first air-pressure adjusting device (30) that generates a compressed gas or a depressurized gas that operates the first operation device (20),
the second pipe (32) is coupled to a second air-pressure adjusting device (30) that generates a compressed gas or a depressurized gas that operates the second operation device (20), and
the pipe joint (40), when the partition member (51) is mounted therein, shuts off the gas communication between the two pipes.

3. The textile machine according to Claim 2, wherein
the pipe joint (40) includes
a sealing member (50) that comes into close contact with outer peripheral surfaces of end portions, at which the two pipes (32) are joined together to prevent leakage of the gas from the two pipes, the sealing member being cylindrical in shape and made of a elastic material; and
a clamping member (41) that clamps the sealing member (50) in a manner that reduces a diameter of the sealing member, wherein
the partition member (51) is formed into a disc shape,
and
a mounting portion (50c), with which an outer peripheral surface of the partition member (51) is brought into close contact to mount the partition member therein, is provided on an inner peripheral surface of an axial center portion of the sealing member.

4. The textile machine according to Claim 3, wherein the mounting portion (50c) is an annular recess formed in the inner peripheral surface of the axial center portion of the sealing member (50).

5. The textile machine according to Claim 4, wherein
two annular protrusions (50d) spaced from each other in an axial direction of the sealing member (50) are provided on the inner peripheral surface of the axial center portion of the sealing member, and
the annular recess is provided between the two annular protrusions (50d).

6. The textile machine according to any one of Claims 1 to 5, wherein the operation devices (20) are splicer devices that splice yarns by using an air flow.

7. A pipe joint (40) for joining two pipes together to allow a fluid to flow through the two pipes (32), the pipe joint comprising:
a sealing member (50) that comes into close contact with outer peripheral surfaces of end portions, at which the two pipes are joined together to prevent leakage of the fluid from the two pipes, the sealing member being made of an elastic material;
a clamping member (41) that clamps the sealing member (50) ; and
a partition member (51) detachably mounted in the sealing member.

8. The pipe joint according to Claim 7, wherein
the sealing member (50) is formed into a cylindrical shape,
the partition member (51) is formed into a disc shape,
and
a mounting portion (50c), with which an outer peripheral surface of the partition member (51) is brought into close contact to mount the partition member therein, is provided on an inner peripheral surface of an axial center portion of the sealing member.

9. The pipe joint according to Claim 8, wherein the mounting portion (50c) is an annular recess formed in the inner peripheral surface of the axial center portion of the sealing member (50).

10. The pipe joint according to Claim 9, wherein
two annular protrusions (50d) spaced from each other in an axial direction of the sealing member (50) are provided on the inner peripheral surface of the axial center portion of the sealing member, and
the annular recess is provided between the two annular protrusions.
